(19) Europäisches Patentamt
European Patent Office
Office européen des brevets

(11) **EP 4 381 266 B1**

(12) **EUROPÄISCHE PATENTSCHRIFT**

(45) Veröffentlichungstag und Bekanntmachung des Hinweises auf die Patenterteilung:
**03.06.2026 Patentblatt 2026/23**

(21) Anmeldenummer: **22738686.9**

(22) Anmeldetag: **06.07.2022**

(51) Internationale Patentklassifikation (IPC):
**G01M 13/04** *(2019.01)* **G01M 13/021** *(2019.01)*

(52) Gemeinsame Patentklassifikation (CPC):
**G01M 13/021; G01M 13/04**

(86) Internationale Anmeldenummer:
**PCT/EP2022/068790**

(87) Internationale Veröffentlichungsnummer:
**WO 2023/011831 (09.02.2023 Gazette 2023/06)**

(54) **VERFAHREN UND VORRICHTUNG ZUR BESTIMMUNG DER RESTLEBENSDAUER EINES GETRIEBES**

METHOD AND DEVICE FOR DETERMINING THE REMAINING SERVICE LIFE OF A GEAR MECHANISM

PROCÉDÉ ET DISPOSITIF DE DÉTERMINATION DE LA DURÉE DE VIE RESTANTE DE MÉCANISME D'ENGRENAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.08.2021 DE 102021004014**

(43) Veröffentlichungstag der Anmeldung:
**12.06.2024 Patentblatt 2024/24**

(73) Patentinhaber: **SEW-EURODRIVE GmbH & Co. KG 76646 Bruchsal (DE)**

(72) Erfinder:
• **HIRSCHMANN, Julian 75045 Walzbachtal (DE)**
• **FREY, Luca 76297 Stutensee (DE)**

(56) Entgegenhaltungen:
**US-A1- 2011 106 510 US-A1- 2014 379 199**

EP 4 381 266 B1

**Beschreibung**

Die Erfindung beschreibt ein Verfahren und eine Vorrichtung zur Bestimmung der Restlebensdauer einer Komponente eines Getriebes und eines Getriebes.

Ein Getriebe weist wenigstens eine Verzahnung und mehrere Lager, in der Regel Wälzlager, auf. Diese Komponenten unterliegen im Betrieb einem Verschleiß, der von verschiedenen Faktoren abhängig ist. Bei der Auslegung des Getriebes wird daher eine typische Belastung zugrunde gelegt, wodurch auch eine Nennlebensdauer bestimmt ist.

Bei der Instandhaltung von technischen Anlagen, wie einem Getriebe, gibt es mehrere Ansätze, die verfolgt werden können. Ziel ist es, einem Ausfall einer Komponente vorzubeugen, das heißt mit dem Austausch der Komponente nicht zu warten, bis die Komponente ausfällt.

Die vorhersagende Instandhaltung (predictive maintenance) ist daher verstärkt in den Fokus geraten. Bei der Vorhersage von Lagerschäden ist es beispielsweise bekannt, per Mikrofon die Laufgeräusche eines Wälzlagers aufzunehmen, um auf diese Weise Unregelmäßigkeiten im Rollverhalten der Wälzkörper festzustellen. Eine andere bekannte Vorhersagemethode registriert Vibrationen im Lager, etwa mit Hilfe von Beschleunigungssensoren, um ungewöhnliche Schwingungen zu erkennen. Dadurch können Schäden frühzeitig erkannt werden und ein Austausch der Komponente ist möglich, bevor diese tatsächlich ausfällt.

Für Verzahnungen sind ebenfalls verschiedene Methoden bekannt, insbesondere die Schwingungsanalyse erlaubt hier genaue Vorhersagen.

Durch diese Methode kann jedoch nur festgestellt werden, ob ein Schaden bereits vorliegt oder sich entwickelt. Sofern keine abnormalen Geräusche oder Schwingungen vorhanden sind, kann darüber keine direkte Aussage über eine voraussichtliche Restlebensdauer erzielt werden.

Nachteilig bei den bekannten Methoden ist zudem, dass prinzipiell für jede zu untersuchende Komponente ein Sensor notwendig ist, der möglichst nur diese Komponente erfasst. Demnach wären selbst bei einer kleinen Anlage oder einem mehrstufigen Getriebe sehr viele Sensoren notwendig. Um die Anzahl der Sensoren gering zu halten, ist es bekannt, an den Komponenten Messpunkte vorzusehen, an die ein entsprechender Sensor von außen aufsetzbar ist. Dabei wird über eine vorbestimmte Zeit, etwa eine Minute, eine Messung durchgeführt und gespeichert, um diese später auszuwerten. Ein Techniker arbeitet nacheinander alle Messpunkte ab, in dem er von einem Messpunkt zum nächsten vorgeht. Bei großen Anlagen mit vielen Messpunkten ist es daher üblich, diese Messungen in Intervallen von einigen Wochen oder Monaten durchzuführen. Dadurch kann jedoch nur eine ungenaue Vorhersage durchgeführt werden. Insbesondere da Schadensereignisse sich schneller entwickeln können als die Intervalldauer beträgt.

Aus der DE 10 2018 214 099 A1 **ist als nächstliegender Stand der Technik ein Verfahren zur unmittelbaren Ermittelung einer theoretischen Schädigung einer Komponente bekannt.**

Aus der US 2017 / 0 082 188 A1 **ist ein Schmiersystem für ein Getriebe bekannt.**

Aus der DE 10 52 200 A **ist eine Steuerung für ein stetig regelbares Getriebe bekannt.**

Aus der US 2004 / 0 122 618 A1 **ist eine Alterungsanzeige für eine Komponente bekannt.**

Aus der EP 1 744 934 B1 **ist ein Verfahren zum Steuern eines automatisierten Kraftfahrzeug-Antriebsstranges bekannt.**

Aus der DE 102 22 187 A1 **ist ein Verfahren zum Bestimmen von Restnutzungsintervallen bekannt.**

Aus der US 2011 / 0 106 510 A1 **ist ein Verfahren zur Diagnose von Fehlern und Schäden an Getrieben bekannt.**

Aus der US 2014 / 379 199 A1 **ist ein Verfahren zum Betreiben eines Motorfahrzeugs bekannt, das mindestens eine Komponente aufweist, die einer benutzungsabhängigen Alterung unterliegt.**

Die Erfindung beabsichtigt daher die Vorhersage der Restlebensdauer zu verbessern und zu vereinfachen.

Diese Aufgabe wird durch ein Verfahren nach Anspruch 1 und einer Vorrichtung nach Anspruch 13 gelöst.

Das erfindungsgemäße Verfahren zur Bestimmung der Restlebensdauer einer Komponente eines Getriebes ist, wobei einmalig:

- Parameter des Getriebes und der Komponente bestimmt werden, wobei die Parameter des Getriebes und der Komponenten beispielsweise umfassen: Art und Typ der Wälzlager, Anzahl der Zähne der Zahnräder, Gesamtübersetzung des Getriebes und
- aus den Parametern eine Nennlebensdauer der Komponente ermittelt wird, wobei die Nennlebensdauer auf Grundlage einer Nennrehzahl und eines Nenndrehmoments angegeben ist, während dem Betrieb wiederholt:

  - ein aktueller Lastzustand des Getriebes erfasst wird, wobei der Lastzustand auch die Drehrichtung beinhaltet,
  - für jede Drehrichtung und/oder jeden Schädigungsmechanismus aus dem Lastzustand eine Teilschädigung der Komponente berechnet wird, wobei berechnete Teilschädigungen zu einer Schädigung summiert und zur vorherigen Schädigung addiert und in einem zeitlichen Verlauf gespeichert wird. und nach einer vorbestimmten Anzahl an Teilschädigungsberechnungen:

- durch lineare Regression des Schädigungsverlaufs und Extrapolation der Regressionsgeraden auf die Nennlebensdauer eine Restlebensdauer der Komponente bestimmt wird.

Der Vorteil besteht darin, dass die Erfassung des aktuellen Lastzustands des Getriebes ausreicht, um die Restlebensdauer einer Komponente des Getriebes zu bestimmen. Dabei spielt es keine Rolle für welche Komponente die Restlebensdauer berechnet werden soll. Es sind daher nicht für jede Komponente eigene Sensoren oder ein eigener Messpunkt notwendig. Die berechnete Restlebensdauer weist zudem aufgrund der Akkumulierung der Schädigungen und der Extrapolation der Regression nur geringe Schwankungen bei veränderten Betriebsbedingungen auf.

Ein weiterer Vorteil gegenüber dem Stand der Technik besteht darin, dass nicht zur Schäden erkannt werden können, sondern eine Aussage zur Restlebensdauer erfolgt. Dies ermöglicht eine bessere Planbarkeit der Instandhaltung. Durch die Erfassung des aktuellen Lastzustands wird die Restlebensdauer dynamisch an sich ändernde Betriebsbedingungen angepasst, so dass eine sehr genaue Restlebensdauer vorliegt.

Die drehrichtungsabhängige Berechnung wird auch dann durchgeführt, wenn das Getriebe dauerhaft nur in einer Drehrichtung betrieben wird. Die nicht benutzte Drehrichtung geht dann mit Null in die Berechnung der Schädigung ein. Insgesamt ist dadurch die Implementierung einfacher, da nicht zuerst festgestellt werden muss ob und in welche einzige Drehrichtung das Getriebe betrieben wird.

Zweckmäßigerweise erfolgt die Bestimmung der Restlebensdauer für jede Komponente eines Getriebes. Dadurch kann eine genaue Restlebensdauer für das gesamte Getriebe berechnet werden.

In einer Ausführung ist eine Komponente des Getriebes eine Verzahnung oder ein Lager, insbesondere Wälzlager. Diese beiden Komponenten unterliegen dem größten Verschleiß, weshalb eine Restlebensdauerberechnung hier besonders vorteilhaft ist.

Erfindungsgemäß wird die Nennlebensdauer einer Komponente, insbesondere eines Lagers, in Abhängigkeit zu einer Nenndrehzahl und einem Nenndrehmoment unter Dauerlast berechnet. Die Nennlebensdauer kann auch beispielsweise in einer Tabelle als Parameter hinterlegt sein. Auf diese Weise ist eine Bezugsgröße vorhanden, zu der die Restlebensdauer berechnet werden kann.

In einer Ausführung werden zur Ermittlung der Nennlebensdauer, insbesondere einer Verzahnung, die Eckpunkte zur Dauerfestigkeit und Kurzzeitfestigkeit in einem Wöhlerdiagramm der Komponente zum aktuell betrachteten Schädigungsmechanismus, insbesondere Zahnfußschaden oder Zahnflankenschaden, bestimmt.

Erfindungsgemäß umfassen die Parameter des Getriebes und der Komponenten beispielsweise: Art und Typ der Wälzlager, Anzahl der Zähne der Zahnräder, Gesamtübersetzung des Getriebes. Die nominelle Lebensdauer, oder Nennlebensdauer, ist erfindungsgemäß auf Grundlage einer Nenndrehzahl und eines Nenndrehmoments angegeben. Daneben können die Parameter umfangreiche Daten zur Konstruktion des Getriebes, zum Material der Komponenten, und/oder weitere Daten enthalten, die für eine Lebensdauerberechnung benötigt und oder hilfreich sind.

In einer Ausführung umfasst der aktuellen Lastzustand eine aktuelle Drehzahl und ein aktuelles Drehmoment am Getriebe. Durch Erfassung von aktuellen Werten ist eine genaue Restlebensdauerberechnung möglich.

Sofern keine Messtechnik einsetzbar ist oder sofern ein Getriebe unter nahezu konstanten Bedingungen betrieben wird, können anstelle der Messwerte auch eine vorgegebene Solldrehzahl und ein vorgegebenes Solldrehmoment zur Berechnung der Restlebensdauer verwendet werden. Dies ermöglicht beispielsweise auch bei bestehenden Anlagen, an denen keine Messtechnik nachrüstbar ist, eine Restlebensdauerberechnung.

In einer weiteren Alternative kann auch ein Lastkollektiv verwendet werden. Dies kann insbesondere bei der Berechnung der Restlebensdauer einer Verzahnung vorteilhaft sein.

In einer Ausführung wird der aktuelle Lastzustand durch Messen der Drehzahl und des Drehmoments an einem Getriebe ermittelt. Der Vorteil der Erfindung besteht darin, dass der Messort keine Rolle spielt, da die Messwerte für die jeweils betrachtete Komponente anhand der Parameter umgerechnet werden. Auf diese Weise ist die Anzahl der Sensoren pro Getriebe sehr gering, wodurch die Restlebensdauerberechnung einfacher und kostengünstiger ist.

Die Messung der Drehzahl kann dabei beispielsweise durch einen Encoder oder eine andere im Stand der Technik bekannte Drehzahlmessvorrichtung erfolgen. Die Drehzahl kann alternativ auch aus einer Motorsteuerung abgeleitet werden, in der die Drehzahl eventuell bereits vorliegt. Auf diese Weise ist eine sehr genaue Drehzahlmessung ermöglicht. Darüber hinaus kann mit Hilfe der Parameter, wie die Übersetzung der einzelnen Verzahnungen, die Drehzahl für jede Komponente des Getriebes aus dieser Drehzahl abgeleitet werden.

Das Drehmoment kann direkt bestimmt werden, beispielsweise mit einem Dehnmessstreifen an einer Welle des Getriebes. Das Drehmoment kann jedoch auch indirekt bestimmt werden, etwa über die elektrische Leistung eines elektrischen Antriebsmotors. Dabei kann beispielsweise eine Strom- und Spannungsmessung an einer Zuleitung des Elektromotors verwendet werden. Auf diese Wiese kann auch das aktuelle Drehmoment an jeder Komponente durch Umrechnung mit Hilfe der Parameter erfolgen.

Vorzugsweise erfolgt die Drehzahl und/oder Drehmomentmessung an der Abtriebswelle oder der Antriebswelle des Getriebes. Diese Wellen sind einfach zugänglich wodurch eine einfache Anbringung der Messvorrichtung und der Sensoren möglich ist. Darüber hinaus ist eventuell eine Nachrüstung einer Messtechnik möglich, die zur Erfassung der Messwerte dient.

Wie bereits erwähnt, ist an einem Getriebe nur an einer Welle eine Drehzahl- und Drehmomenterfassung notwendig. Der aktuelle Lastzustand der Komponente wird durch Umrechnung der Messwerte anhand der Parameter ermittelt. Auf diese Weise kann mit nur einer Messung für jede Komponente eines Getriebes, und insbesondere für alle Komponenten, eine Restlebensdauer berechnet werden.

In einer Ausführung wird die Berechnung der Restlebensdauer in einer Berechnungseinheit durchgeführt, sobald neue Messwerte übermittelt wurden. Dadurch ist eine kontinuierliche oder zumindest aktuelle Restlebensdauerberechnung ermöglicht. Die Berechnungseinheit kann beispielsweise mit der Messtechnik kombiniert in einer Messvorrichtung an dem Getriebe angeordnet sein. Auf diese Weise kann eine Überwachung eines Getriebes einfach lokal erfolgen.

In einer vorteilhaften Ausführung ist die Berechnungseinheit als zentrale Berechnungseinheit ausgeführt. Dabei können insbesondere die Messwerte von mehreren Getrieben an diese zentrale Berechnungseinheit übermittelt werden. Dies hat den Vorteil, dass eine Berechnungseinheit die Restlebensdauerberechnung für mehrere Getriebe oder Anlagen durchführen kann. Auf diese Weise ist nur eine Berechnungseinheit notwendig, so dass die Installationskosten insgesamt gesenkt werden können.

In einer Ausführung sind die einmalig bestimmten Parameter und Nennlebensdauern in einer Parameter-Datenbank gespeichert und die Berechnungseinheit besitzt Zugriff auf die Parameter-Datenbank. Auf diese Weise ist beispielsweise eine einfache Aktualisierung der Parameterwerte möglich, unabhängig von der Berechnungseinheit.

Dabei kann eine solche Parameterdatenbank mit einer zentralen Berechnungseinheit oder mit einzelnen, je Getriebe separaten Berechnungseinheiten verbunden sein.

Besonders zweckmäßig ist es, wenn die Parameterdatenbank als zentrale Parameterdatenbank ausgebildet ist. Auf diese Weise kann eine Redundanz an Parameterwerten verhindert werden. In einer Anlage mit mehreren identischen Getrieben ist auf diese Weise nur eine Parameterdatenbank notwendig, auf die alle einzelnen oder eine zentrale Berechnungseinheit Zugriff besitzen.

In einer Ausführung werden die erfassten Lastzustände an eine Messwerte-Datenbank übertragen, auf die die Berechnungseinheit Zugriff besitzt. Auf diese Weise ist eine von der Berechnungseinheit getrennte Speicherung der Messwerte möglich.

Insbesondere vorteilhaft ist es, wenn die Messwertedatenbank als zentrale Datenbank ausgebildet ist. Auf diese Weise kann eine Redundanz an Messwertedatenbanken verhindert werden, wenn mehrere Getriebe vorhanden sind. Dadurch können die Messwerte von mehreren Getrieben in einer einzigen Messwertedatenbank gespeichert werden.

In Bezug auf die Berechnungseinheit, die Parameterdatenbank und die Messwertedatenbank kann zentral auf eine Anlage bezogen sein. Auf diese Weise ist beispielsweise in einer komplexen Anlage nur jeweils eine dieser Einheiten notwendig. Die Berechnung der Restlebensdauer von allen Komponenten erfolgt dabei zentral, etwa in einer Leitwarte oder einem Rechenzentrum vor Ort.

Zentral kann aber auch bedeuten, dass zumindest eine der Einheiten entfernt, etwa Standortübergreifend, angeordnet ist. Dabei können die Messwerte von mehreren Standorten zentral an einem Standort gebündelt sein. Die Übertragung der Messwerte kann dabei über ein Intranet oder das Internet erfolgen.

Zentral kann jedoch auch bedeuten, dass zumindest eine Einheit als Cloud-Anwendung im Internet vorhanden ist. Auf diese Weise kann eine Restlebensdauerberechnung vollständig als Dienstleistung ausgeführt sein, wobei die Datenspeicherung und die Restlebensdauerberechnung als Cloud-Anwendung ausgeführt wird. Der Vorteil dabei ist, dass für die Restlebensdauer nur eine minimale Hardwareinstallation vor Ort notwendig ist, insbesondere, wenn bestehende Anlagen zur Erfassung des aktuellen Lastzustands geeignet sind, etwa eine Drehzahlmessung einer Motorsteuerung und eine vorhandene Leistungsmessung. Eine Nachrüstung ist somit an bestehenden Anlagen sehr kostengünstig umsetzbar.

Dabei ist es zweckmäßig, wenn jeder Messwert in der Messwertedatenbank zusätzlich einem Kunden und/oder einer Anlage eindeutig zuordenbar ist.

In einer Ausführung werden die Lastzustände vor der Übertragung verschlüsselt und/oder komprimiert. Auf diese Weise ist eine Datensicherheit gewährleistet und/oder die zu übertragene Datenmenge reduziert. Dies ist insbesondere bei der Übertragung der Messwerte über das Internet vorteilhaft.

Die Erfassung der aktuellen Lastzustände erfolgt in der Regel sehr hochfrequent. Beispielsweise wird die Drehzahl mehrmals pro Sekunde erfasst. Eine direkte Übertragung in dieser Frequenz wäre unmöglich. Insbesondere, weil durch jeden dieser Werte eine neue Berechnung der Restlebensdauer triggern würde. In einer Ausführung wird daher vor der Übertragung an die Messwerte-Datenbank aus mehreren Messwerten ein Lastäquivalent und ein Drehzahläquivalent berechnet. Dieses Lastäquivalent und Drehzahläquivalent wird dann in geringerer Frequenz als aktueller Lastzustand zur Berechnung an die Messwerte-Datenbank übertragen. Auf diese Weise kann die Menge an Daten reduziert werden, die an eine Messwertedatenbank übertragen wird. Auf diese Weise wird die Zeit zwischen zwei Übertragungen und damit die Zeit zwischen zwei Restlebensdauerberechnungen vergrößert.

Alternativ könnte die Bildung der Last- und Drehzahläquivalente auch auf Seite einer Berechnungseinheit erfolgen, wodurch aber die zu übertragende Datenmenge nicht reduziert wäre.

In einer Ausführung wird das Verfahren für mehrere, insbesondere alle, Komponenten des Getriebes ausgeführt. Der Vorteil dabei ist, dass eine genaue Restlebensdauerermittlung des Getriebes ermöglicht ist. Wie oben erwähnt, können für alle Komponenten die Restlebensdauern aus denselben Messwerten bestimmt werden, so dass der messtechnische Aufwand am Getriebe dadurch nicht erhöht wird.

In einer Ausführung, bei der die Komponente ein Wälzlager ist, umfasst die Nennlebensdauer eine Nenndrehzahl und ein Nenndrehmoment, und der aktuelle Lastzustand umfasst eine aktuelle Drehzahl und ein aktuelles Drehmoment, ist das Verfahren dadurch gekennzeichnet, dass zur Berechnung der Teilschädigung:

- ein Drehzahlfaktor berechnet wird, der die aktuelle Drehzahl in ein Verhältnis zur Nenndrehzahl setzt und ein Drehmomentfaktor berechnet wird, der das aktuelle Drehmoment in ein Verhältnis zum Nenndrehmoment setzt, und
- aus den Faktoren und der Nennlebensdauer eine Bezugslebensdauer berechnet wird und aus dieser Bezugslebensdauer die Teilschädigung berechnet wird.

Auf diese Weise ist die aktuelle Teilschädigung eines Wälzlagers sehr genau bestimmbar, wobei eine geringe Varianz bei sich wechselnden Betriebsbedingungen erzielt wird.

In einer Ausführung, bei der die Komponente eine Verzahnung ist, umfasst die Nennlebensdauer eine Nenndrehzahl und ein Nenndrehmoment, und die Parameter umfassen wenigstens ein Wöhlerdiagramm für jeden Schädigungsmechanismus in beide Drehrichtungen, und der aktuelle Lastzustand liegt als Lastkollektiv vor, ist das Verfahren dadurch gekennzeichnet, dass zur Berechnung der Teilschädigung die folgenden Schritte ausgeführt werden:

- für jeden Schädigungsmechanismus und jede Drehrichtung ein dauerhaft ertragbares Drehmoment berechnet wird, bei dem kein Schaden gemäß dem Schädigungsmechanismus auftritt,
- alle Messwerte mit einem Betrag kleiner als das dauerhaft ertragbare Drehmoment aus dem Lastkollektiv entfernt werden,
- aus dem verbleibenden Lastkollektiv eine äquivalente Drehzahl und ein äquivalentes Drehmoment bestimmt wird,
- aus der äquivalenten Drehzahl eine Anzahl an Lastwechseln berechnet wird, insbesondere unter Verwendung der Getriebeübersetzung,
- aus dem äquivalenten Drehmoment in Abhängigkeit des aktuellen Schädigungsmechanismus eine äquivalente Zahnfußspannung oder eine äquivalente Zahnflankenpressung berechnet wird,
- aus der Zahnfußspannung oder der Zahnflankenpressung eine ertragbare Anzahl an Lastwechseln berechnet wird und
- aus dem Verhältnis der berechneten Lastwechsel im Lastkollektiv und der berechneten ertragbaren Anzahl an Lastwechseln eine Teilschädigung berechnet wird.

Auf diese Weise sind die einzelnen Teilschädigungen einer Verzahnung und daraus eine Schädigung der Verzahnung sehr genau berechenbar. Die Teilschädigungen umfassen dabei zwei Schädigungsmechanismen, Zahnflankenschäden aufgrund der Zahnflankenpressung und Zahnfußschäden aufgrund der Zahnfußspannung. Beide Schädigungsmechanismen sind zudem richtungsabhängig. Für eine Schädigung einer Verzahnung müssen demnach vier unterschiedliche Teilschädigungen berechnet und addiert werden.

Die Erfindung umfasst auch ein Verfahren zur Bestimmung der Restlebensdauer eines Getriebes nach Anspruch 13, wobei für wenigstens eine Komponente des Getriebes eine Restlebensdauer gemäß einem oben beschriebenen Verfahren zur Bestimmung einer Restlebensdauer eine Komponente bestimmt wird. Aus den Restlebensdauern der einzelnen Komponenten wird eine Gesamt-Restlebensdauer des Getriebes ermittelt. Auf diese Weise kann eine Darstellung, etwa in einer virtuellen Darstellung einer Anlage, vereinfacht sein.

In einer Ausführung kann die Gesamt-Restlebensdauer der kürzesten, ermittelten Restlebensdauer der einzelnen Komponenten entsprechen. Auf diese Weise kann ein Ausfall einer Komponente des Getriebes sicher verhindert werden.

Die Erfindung umfasst auch eine Vorrichtung zur Ermittlung einer Restlebensdauer eines Getriebes, mit einer Messvorrichtung zur Erfassung einer Drehzahl und eines Drehmoments des Getriebes und mit einer Berechnungseinheit zur Durchführung eines erfindungsgemäßen Verfahrens.

In einer Ausführung weist die Vorrichtung eine Parameterdatenbank zum Speichern der Parameter des Getriebes auf, insbesondere wobei die Parameterdatenbank eine über das Internet zugängliche zentrale Datenbank ist, und die Berechnungseinheit zum Abrufen von Parametern mit der Parameterdatenbank verbunden ist. Auf diese Weise ist eine zentrale Wartung der Parameter möglich, so dass ein Installationsaufwand vor Ort verringerbar ist.

In einer Ausführung weist die Vorrichtung eine Messwertedatenbank auf, in der die von der Messvorrichtung erfassten Messwerte gespeichert werden, insbesondere wobei die Messwertedatenbank eine über das Internet zugängliche zentrale Datenbank ist, und die Berechnungseinheit zum Abrufen von Messwerten mit der Messwertedatenbank verbunden ist. Auf diese Weise ist eine Berechnung der Restlebensdauer von mehreren Komponenten in einer Berechnungseinheit bündelbar, wodurch ein Installationsaufwand verringerbar ist.

Insbesondere kann die Restlebensdauer auf diese Weise als Dienstleistung angeboten werden.

Die Erfindung ist nachfolgend anhand von Ausführungsbeispielen mit Bezug auf die beiliegenden Zeichnungen näher beschrieben.

Es zeigt:

Fig. 1: ein Blockdiagramm einer erfindungsgemäßen Vorrichtung zur Bestimmung der Restlebensdauer eines Getriebes,

Fig. 2: ein Ablaufdiagramm eines erfindungsgemäßen Verfahrens,

Fig. 3: ein Ablaufdiagramm eines Verfahrens zur Bestimmung der Teilschädigung eines Wälzlagers,

Fig. 4: ein Ablaufdiagramm eines Verfahrens zur Bestimmung der Teilschädigung einer Verzahnung,

Fig. 5: ein Schaubild zur Verdeutlichung der Bestimmung einer Teilschädigung einer Verzahnung, und

Fig. 6: ein Schädigungsverlauf einer Komponente mit extrapolierter Restlebensdauer.

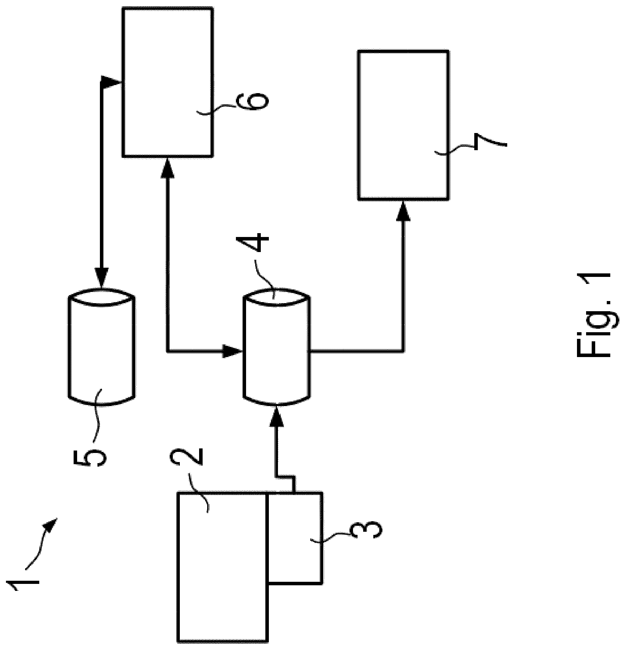

Die Fig. 1 zeigt ein Blockdiagramm einer erfindungsgemäßen Vorrichtung 1 zur Bestimmung der Restlebensdauer wenigstens einer Komponente eines Getriebes 2. Das Getriebe 2 kann ein beliebiges Getriebe sein und beispielsweise eine oder mehrere Getriebestufen besitzen. Eine Getriebestufe umfasst eine Verzahnung beispielsweise mit zwei Zahnrädern. Als Zahnräder können etwa gerade oder schrägverzahnte Stirnräder, Kegelräder oder andere Zahnräder verwendet werden. Ein Zahnrad sitzt in der Regel auf einer Welle, die mit einem oder zwei Wälzlagern drehgelagert ist. Eine Komponente im Sinne der Erfindung ist jedes Wälzlager und jede Verzahnung des Getriebes. Demnach besitzt ein Getriebe mehrere Komponenten, für die eine Restlebensdauerberechnung durchgeführt werden kann.

Die Vorrichtung weist eine Messvorrichtung 3 auf, die an dem Getriebe 2 angeordnet ist. Die Vorrichtung weist im Beispiel weiter eine Messwertedatenbank 4, eine Parameterdatenbank 5 eine Berechnungseinheit 6 und eine Darstellungseinheit 7 auf,

Die Messvorrichtung 3 ist zur Erfassung eines Drehmoments und einer Drehzahl an dem Getriebe angeordnet. Zur Durchführung des erfindungsgemäßen Verfahrens ist es dabei ausreichend eine Drehzahl und ein Drehmoment zu erfassen.

Die Drehzahl kann beispielsweise am Antrieb, am Abtrieb oder an einer anderen Welle innerhalb des Getriebes durch einen entsprechenden Drehzahlsensor, etwa einen Hallsensor, erfasst werden. Prinzipiell ist es auch möglich eine Drehzahl vom antreibenden Motor zu übernehmen. Insbesondere bei Elektromotoren kann die Motorsteuerung eine Drehzahl bereitstellen.

Das aktuelle Drehmoment kann beispielsweise am Antrieb, am Abtrieb oder an einer anderen Welle innerhalb des Getriebes durch einen entsprechenden Drehmomentsensor, etwa ein Dehnmessstreifen, erfasst werden. Das Drehmoment kann aber auch beispielsweise indirekt über die momentane, elektrische Leistung eines antreibenden Elektromotors bestimmt werden.

Die Messvorrichtung 3 kann dazu eingerichtet sein, Messwerte in kurzen Intervallen zu erfassen und an die Messwertedatenbank 4 zu übertragen.

Die Parameterdatenbank 5 enthält umfassende Daten zu dem Getriebe. Dazu gehören die Anzahl der Zähne aller Zahnräder und somit die Übersetzungsverhältnisse aller Getriebestufen. Aus diesen Daten kann beispielsweise die Drehzahl aller Komponenten aus der einen ermittelten Drehzahl berechnet werden. Wird beispielsweise die Drehzahl am Antrieb erfasst, kann daraus die Drehzahl jedes Wälzlagers und jeder Verzahnung berechnet werden. Analog kann das Drehmoment für jede Komponente aus dem einen erfassten Drehmomentwert berechnet werden. Die Parameterdatenbank 5 enthält unter anderem aber auch Daten zu Festigkeit und Material der Komponenten.

Die Berechnungseinheit 6 ist mit der Messwertedatenbank 4 und der Parameterdatenbank 5 verbunden, um auf deren Daten für die Berechnung zurückzugreifen.

Die Berechnungseinheit 6 ist zur Ausführung eines erfindungsgemäßen Verfahrens eingerichtet. Dazu greift die Berechnungseinheit 6 auf die Parameterdatenbank 5 und die Messwertedatenbank 4 zu. Ein berechneter Restlebensdauerwert wird wiederum in der Messwertedatenbank 4 der Komponente zugeordnet abgespeichert.

Eine Darstellungseinheit 7 greift auf diesen Restlebensdauerwert zurück und kann die Restlebensdauer einer Komponente anzeigen oder darstellen. Die Darstellungseinheit 7 kann beispielsweise ein Abbild einer Komponente oder eines Getriebes zeigen, wobei die Restlebensdauern der Komponenten dem Bild entsprechend zugeordnet dargestellt werden. Die Darstellungseinheit 7 kann beispielsweise Teil einer Leitwarte sein oder in diese integriert sein. Die Darstellungseinheit 7 kann auch ein mobiles Gerät umfassen und/oder Warnungen anzeigen oder generieren, wenn eine Komponente eine Warnschwelle einer Restlebensdauer unterschreitet oder unterschritten ist. Auf diese Weise kann ein Austausch einer Komponente veranlasst werden.

Es kann auch vorteilhaft sein, wenn die Restlebensdauern direkt in einem Instandhaltungsplanungsprogramm verarbeitet werden. Hierzu kann das Instandhaltungsplanungsprogramm beispielsweise Zugriff auf die Messwertedatenbank besitzen, um die Restlebensdauern auszulesen.

Die Vorrichtung zur Bestimmung der Restlebensdauer kann eine dem Getriebe 2 zugeordnete Einheit bilden, wobei alle Einheiten in einem gemeinsamen Gehäuse angeordnet sind. Die Vorrichtung kann jedoch auch verteilt angeordnet sein. Auf diese Weise können etwa mehrere Messvorrichtungen 3 mit einer gemeinsamen Messwertedatenbank 4 verbunden sein. Somit können bei einer größeren Anlage bis auf die Messvorrichtungen 4 alle weiteren Einheiten als zentrale Einheiten ausgebildet sein und sind somit nur einmal vorhanden. Die zentralen Einheiten können etwa in einer Leitwarte oder einem gesonderten Rechenzentrum angeordnet sein.

In einer Ausführung der Erfindung kann die Berechnungseinheit 6, die Parameterdatenbank 5 und die Messwertedatenbank 3 zentral im Internet verfügbar sein. Bei dieser Cloud-Anwendung liegen die Daten vorzugsweise beim Hersteller oder Anbieter des Getriebes, wodurch die Restlebensdauerberechnung etwa als Dienstleistung angeboten werden kann. Für eine Zuordnung der Messwerte zu einem Getriebe und/oder Kunden sind diese vorzugsweise mit einer eindeutigen Kennung versehen. Vorteilhaft dabei ist, dass etwa die Parameterdatenbank sehr umfangreich sein kann und zentral gepflegt werden kann. Eine aufwändige Installation von Datenbanken und Rechenkapazität ist daher am Einsatzort des Getriebes nicht notwendig, weshalb eine Implementation der Restlebensdauerberechnung eine geringe Anfangsinvestition darstellt. Insbesondere auch dadurch, dass nur eine einfache Messvorrichtung zur Erfassung einer Drehzahl und eines Drehmoments erforderlich ist. Im Vergleich zu bekannten Verfahren mit mehreren akustischen Sensoren oder Beschleunigungssensoren oder Messpunkten kann somit eine sehr einfache und kostengünstige Restlebensdauerberechnung betrieben werden. Auf diese Weise kann eine vorhersagende Instandhaltung durchgeführt werden, wodurch die Instandhaltungskosten und die Materialkosten für Austauschteile verringerbar sind.

Prinzipiell können alle Messwerte der Messvorrichtung in die Messwertedatenbank 4 übernommen werden. Ist die Messwertedatenbank 4 jedoch entfernt, beispielsweise über das Internet (Cloud) angebunden, kann es bei einer hohen Abtastfrequenz und/oder bei sehr vielen Messvorrichtungen 3 zu einer hohen Datenlast kommen. Daher kann die Messvorrichtung 3 eine Vorverarbeitung durchführen, bevor die Messwerte übertragen werden. Dabei werden über ein vordefiniertes Zeitintervall aus mehreren Messwerten ein Lastäquivalent und ein Drehzahläquivalent gebildet.

Zusätzlich oder alternativ können die Messwerte oder die Last- und Drehzahläquivalente vor der Übertragung komprimiert und/oder verschlüsselt werden.

Sofern zwei Wälzlager, die eine Welle abstützen baugleich sind und die gleiche aktuelle Laufzeit aufweisen, kann die Restlebensdauer des einen Wälzlager auch auf das andere Wälzlager übertragen werden. Diese sollte identisch sein und würde durch das erfindungsgemäße Verfahren auch identisch berechnet werden.

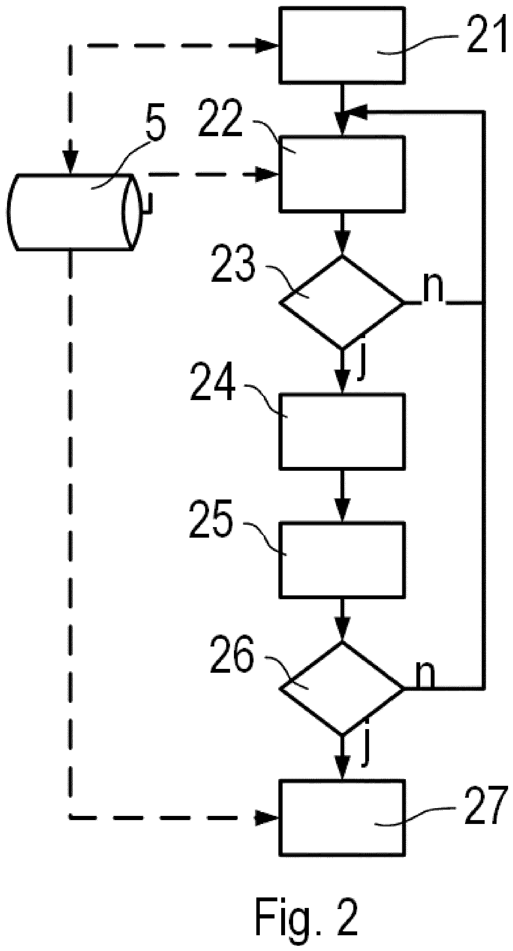

Die Fig. 2 zeigt ein Ablaufdiagramm eines erfindungsgemäßen Verfahrens zur Bestimmung einer Restlebensdauer einer Komponente eines Getriebes. Das Verfahren ermittelt die Restlebensdauer einer ausgewählten Komponente. Wie bereits oben erwähnt, wird dazu eine Drehzahl- und Drehmomentermittlung benutzt, die jedoch nicht abhängig ist von der ausgewählten Komponente. Demnach kann das erfindungsgemäße Verfahren unabhängig von der Erfassung der Messwerte für jede Komponente eines Getriebes durchgeführt werden. Selbstverständlich kann das Verfahren auch für mehrere oder alle Komponenten eines Getriebes durchgeführt werden.

In einem ersten Schritt 21 werden einmalig Parameter des Getriebes und der Komponente bestimmt, für die eine Restlebensdauer ermittelt werden soll. Diese Parameter umfassen, wie oben erwähnt, zahlreiche Daten zu den einzelnen Zahnrädern und Lagern. Dazu gehören auch Typ- und Katalogdaten zu Nennlasten und Nenndrehzahlen. Dazu gehören auch Wöhlerdiagramme zu einzelnen Schädigungsmechanismen von Verzahnungen. Hierbei ist es vorteilhaft, wenn die Parameterdatenbank 5 zentral, etwa im Internet, verfügbar ist. Dadurch kann eine umfangreiche Datenbank vorgehalten werden, die zentral aktualisierbar ist. Eine Installation oder Aktualisierung vor Ort ist somit vermeidbar.

Aus den Parametern wird zudem eine Nennlebensdauer der Komponente ermittelt und beispielsweise in der Parameterdatenbank abgespeichert. Die Nennlebensdauer bezieht sich auf eine Nenndrehzahl und ein Nenndrehmoment.

Zur Bestimmung der Restlebensdauer wird während dem Betrieb wiederholt ein aktueller Lastzustand des Getriebes erfasst. Dies kann, wie oben beschrieben, durch eine Messvorrichtung 3 erfolgen, die beispielsweise eine aktuelle Drehzahl und ein aktuelles Drehmoment erfasst. Sofern keine Messvorrichtung vorhanden ist, kann auch eine spezifizierte Solllast, also ein Solldrehmoment und eine Solldrehzahl verwendet werden.

Die Berechnung wird durch das Vorhandensein eines neuen Messwertes getriggert oder sofern aus den Messwerten Äquivalente gebildet werden, wie oben beschrieben, nach Vorliegen der Äquivalente, die über einen vorbestimmten Zeitraum gebildet werden.

Der Lastzustand beinhaltet auch die aktuelle Drehrichtung. Daneben kann es für eine Komponente verschiedene Schädigungsmechanismen geben, die gesondert betrachtet werden müssen.

In einem nächsten Schritt 22 wird daher für jede Drehrichtung und/oder jeden Schädigungsmechanismus aus dem Lastzustand eine Teilschädigung der Komponente berechnet. Im einfachsten Fall wird als für die beiden Drehrichtungen jeweils eine Teilschädigung berechnet.

Dazu wird überprüft 23, ob bereits alle Teilschädigungen einer Komponente berechnet wurden. Falls nein, wird der Schritt 22 für die verbleibenden Teilschädigungen wiederholt. Also etwa für die andere Drehrichtung.

Falls ja, werden im folgenden Schritt 24 die berechneten Teilschädigungen zu einer Schädigung summiert. Diese Schädigung spielgelt die Schädigung der Komponente im aktuell betrachteten Zeitraum wieder.

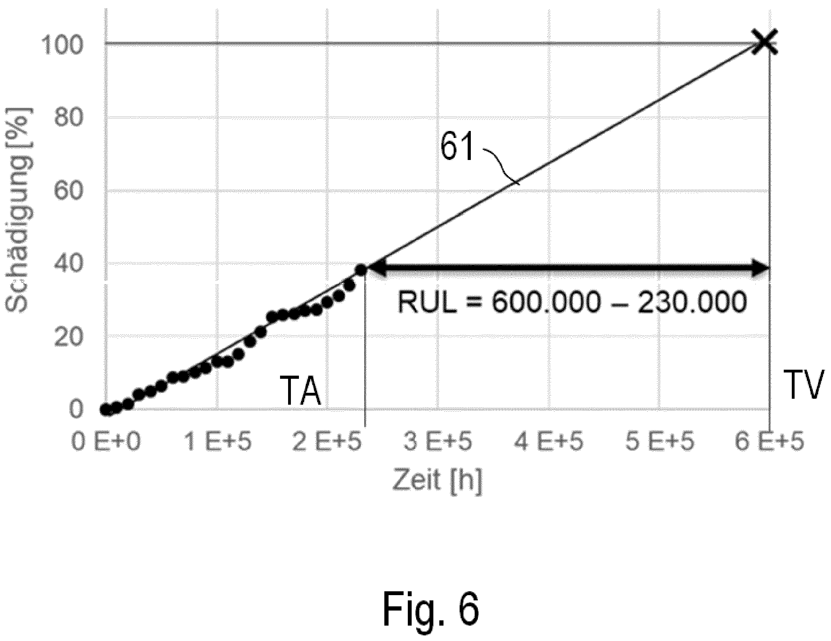

Diese Schädigung wird im nächsten Schritt 25 zur vorherigen Schädigung addiert, so dass aus den Schädigungswerten ein zeitlicher Schädigungsverlauf gebildet werden kann. Ein solcher Schädigungsverlauf ist beispielhaft in der Fig. 6 gezeigt. Jeder Punkt des Diagramms entspricht einer auf diese Weise berechneten Schädigung.

Anschließend wird in Schritt 26 geprüft, ob eine vorbestimmte Anzahl an Schädigungen berechnet wurden. Falls nein, wird mit Schritt 22 fortgefahren.

Falls ja, wird in Schritt 27 durch lineare Regression des Schädigungsverlaufs, also der einzelnen Schädigungen, eine Regressionsgeraden 61 durch die einzelnen SchädigungsWerte ermittelt.

Die Nennlebensdauer wurde in dem ersten Schritt 21 aus Parametern der Parameterdatenbank 5 bestimmt und ist konstant über die Lebensdauer der Komponente. Die Schädigung ist hier in Prozent der Nennlebensdauer angegeben. Im Diagramm der Fig. 6 ist die Nennlebensdauer als waagrechte Linie bei 100% eingezeichnet. Da hier Schädigungen aufgezeichnet werden, bedeutet 100% Schädigung ein Versagen der Komponente und eine Restlebensdauer von 0. Die Schädigungen besitzen immer auch eine zeitliche Dimension, da zu jeder Schädigungsberechnung eine Zeit oder aktuelle Betriebszeit bekannt ist. Beispielsweise kann eine Schädigungsberechnung pro Minute erfolgen, wodurch automatisch die zeitlichen Abstände der Schädigungswerte jeweils eine Minute betragen. So wie die Schädigungen jeweils zum vorherigen Wert addiert werden, wird dies auch mit der Zeit durchgeführt, weshalb ein Fortschritt auf der Zeitachse automatisch gegeben ist.

Hierbei kann auch ein sogenanntes rollendes Fenster (rolling window oder moving window) verwendet werden, wobei jeweils nur eine bestimmte Anzahl an vorherigen Schädigungswerten in die Regression einfließen.

Die Regressionsgerade 61 wird über die aktuelle Zeit TA hinaus extrapoliert, bis sie die waagrechte Linie der Nennlebensdauer schneidet. Der Zeitwert TV dieses Schnittpunkts entspricht dem Versagenszeitpunkt TV der Komponente. Die Differenz aus dem aktuellen Zeitwert TA und dem Versagenszeitpunkt TV ist die Restlebensdauer RUL der Komponente, also:

$$RUL = TV - TA.$$

Durch die Regression und Extrapolation der Schädigung ist eine zuverlässige Vorhersage der Restlebensdauer möglich, die auch bei schwankenden Betriebsbedingungen keine großen Schwankungen unterliegt.

Eine Komponente des Getriebes für die eine Restlebensdauer berechnet werden kann, kann beispielsweise ein Wälzlager oder eine Verzahnung sein.

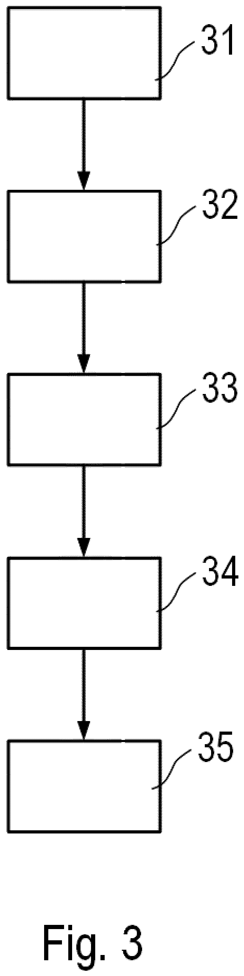

Die Fig. 3 zeigt ein Ablaufdiagramm für die Berechnung einer Schädigung an einem Wälzlager. Die in Fig. 3 gezeigten Schritte bilden somit die Schritte 22 bis 24 des Verfahrens zur Bestimmung der Restlebensdauer der Fig. 2.

Bei einem Wälzlager gibt es im Wesentlichen nur einen Schädigungsmechanismus. Die ermittelten Drehzahl- und Drehmomentwerte werden demnach in einem ersten Schritt 31 nach Drehrichtung separiert.

In einem zweiten Schritt 32 werden für jede Drehrichtung getrennt ein Drehzahlfaktor $k_n$, der die aktuelle Drehzahl in ein Verhältnis zur Nenndrehzahl setzt und ein Drehmomentfaktor $k_m$, der das aktuelle Drehmoment in ein Verhältnis zum Nenndrehmoment setzt, berechnet. Diese Faktoren berechnen sich wie folgt:

$$k_n = reale\_gemessene\_äquivalente\_Drehzahl / Nenndrehzahl$$

$$k_m = reale\_gemessenes\_äquivalentes\_Drehmoment / Nenndrehmoment$$

Aus diesen Faktoren wird im folgenden Schritt 33 eine Bezugslebensdauer berechnet, die etwa einer Nennlebensdauer unter den aktuellen Betriebsbedingungen entspricht. Demnach wird für deren Berechnung die Nennlebensdauer aus der Parameterdatenbank mit den Faktoren kn und km wie folgt angepasst:

$$Bezugslebensdauer = k_n \times k_M^{exp} \times Nennlebensdauer$$

Wobei exp abhängig vom Lagertyp ist und wie die Nennlebensdauer aus der Parameterdatenbank ausgelesen wird. Der Exponent exp berücksichtigt über den Lagertyp beispielsweise auch Material und Geometrie des Lagers, etwa ob es sich um ein Kugel-, Nadel- oder Rollenlager handelt.

Im folgenden Schritt 34 wird die Teilschädigung des Lagers für jede Drehrichtung dann wie folgt berechnet:

$$\text{Teilschädigung\_links} = \text{Delta\_t\_links} / \text{Bezugslebensdauer} *100$$

$$\text{Teilschädigung\_rechts} = \text{Delta\_t\_rechts} / \text{Bezugslebensdauer} *100$$

wobei gilt:

Delta_t_links: Dauer der Drehrichtung links des aktuellen Datensatz
Delta_t_rechts: Dauer der Drehrichtung rechts des aktuellen Datensatz

Die Schädigung wird im folgenden Schritt 35, wie bereits oben beschrieben, aus der Summe der Teilschädigungen bestimmt zu:

$$\text{Schädigung} = \text{Teilschädigung \_links} + \text{Teilschädigung \_rechts}$$

Diese Schädigung fließt dann in das weitere Verfahren der Fig. 2 gemäß Schritt 25 ein.

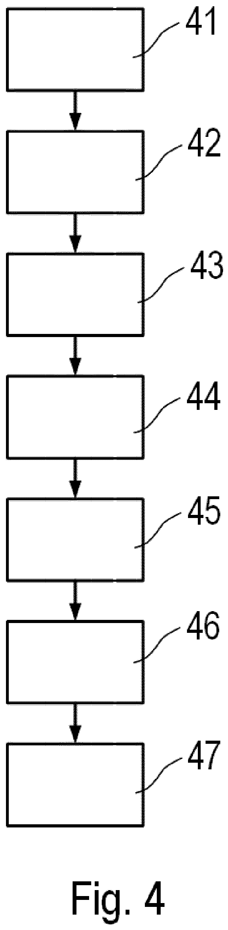

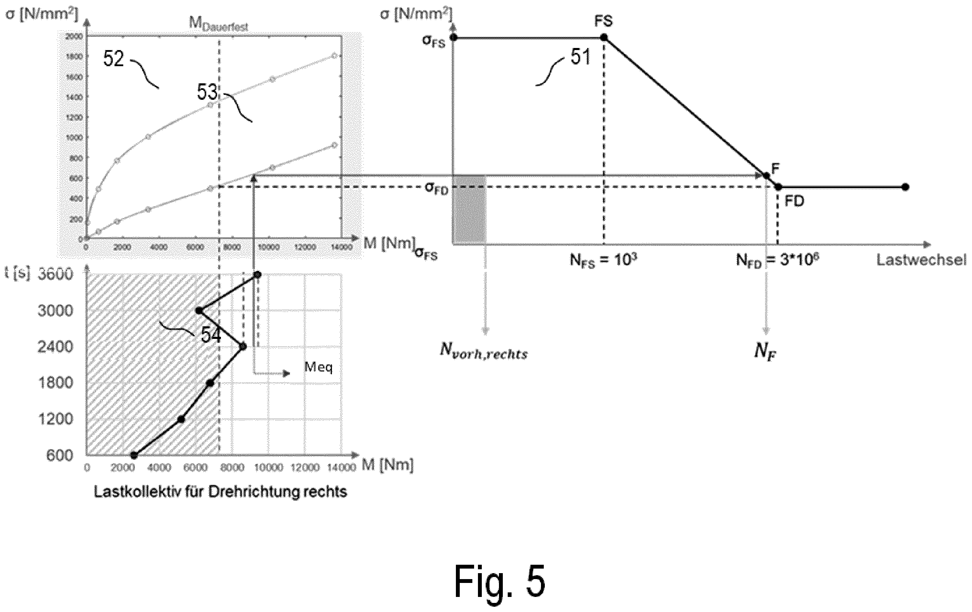

Die Fig. 4 zeigt ein Ablaufdiagramm für die Berechnung einer Teilschädigung einer Verzahnung. Das Verfahren wird nachfolgend mit Bezug auf die Fig. 5 erläutert. Die in Fig. 4 gezeigten Schritte bilden somit die Berechnung der Teilschädigung des Schritts 22 des Verfahrens zur Bestimmung der Restlebensdauer der Fig. 2

Eine Verzahnung besitzt zwei unterschiedliche Schädigungsmechanismen. Diese sind Zahnflankenschaden und Zahnfußbruch. Beide sind auch Drehrichtungsabhängig, so dass für eine Schädigungsberechnung einer Verzahnung insgesamt vier Teilschädigungen bestimmt werden müssen. Gemäß Fig. 2 müsste der Schritt 22, also das Verfahren nach Fig. 4, vier mal ausgeführt werden.

Die Fig. 4 zeigt beispielhaft die Berechnung eines Zahnfußschadens in Drehrichtung rechts. Die Berechnungen eines Zahnflankenschadens und der Drehrichtung links erfolgen analog hierzu.

Zunächst wird in einem ersten Schritt 41 für den aktuellen Schädigungsmechanismus und die aktuelle Drehrichtung ein dauerhaft ertragbares Drehmoment $M_{Dauerfest}$ berechnet, bei dem kein Schaden gemäß dem Schädigungsmechanismus auftritt. Dieses dauerhaft ertragbare Drehmoment wird aus den Daten der Parameterdatenbank bestimmt. Die Ermittlung des dauerhaft ertragbaren Drehmoments $M_{Dauerfest}$ kann mittels Umrechnungstabelle (siehe Schritt 31) und dem der Verzahnung zugeordneten Eckpunkt "FD" im dem Schädigungsmechanismus zugeordneten Wöhlerdiagramms 51 ermittelt werden (siehe Fig. 5 rechts oben). Aus den Parametern können für jede Verzahnung im Getriebe vier Wöhlerdiagramme für jeweils beide Drehrichtungen und beide Schädigungsmechanismen ausgelesen werden. In Fig. 5 entspricht dies den gestrichelten Linien ausgehend vom Punkt FD des Wöhlerdiagramms. Die Spannung $\sigma_{FD}$ des Wöhlerdiagramms wird in das Diagramm der Fig. 5 links oben übertragen und anhand der Zahnfußspannungskurve 53 das zugehörige Drehmoment bestimmt. Dieses kann nach links unten in das Lastkollektiv übertragen werden.

Für Zahnflankenschäden ist hier die Kurve zur Zahnflankenpressung 52 zu verwenden.

Die Messwerte einer Messvorrichtung liegen als Lastkollektive 54 vor. In Fig. 5 links unten ist ein Lastkollektiv 54 beispielhaft dargestellt. Die vertikale gestrichelte Linie stellt das dauerhaft ertragbare Drehmoment $M_{Dauerfest}$ für diesen Schädigungsmechanismus dar.

Alle Werte des Lastkollektivs 54, die links von dieser Linie liegen, stellen Belastungen dar, die kleiner als das dauerhaft ertragbare Drehmoment $M_{Dauerfest}$ sind. Diese Belastungen tragen nicht zur Schädigung bei. In einem nachfolgenden Schritt 42 werden alle Messwerte mit einem Betrag kleiner als das dauerhaft ertragbare Drehmoment $M_{Dauerfest}$ aus dem Lastkollektiv 54 entfernt.

In einem nachfolgenden Schritt 43 wird aus dem verbleibenden Lastkollektiv eine äquivalente Drehzahl und ein äquivalentes Drehmoment $M_{eq}$ bestimmt wird. In Fig. 5 ist dieses äquivalente Drehmoment $M_{eq}$ als vertikale Linie dargestellt.

In einem weiteren Schritt 44, wird aus der äquivalenten Drehzahl unter Rückgriff auf die Parameterdatenbank eine äquivalente Anzahl an Lastwechseln $N_{vorh,rechts}$ berechnet, insbesondere unter Verwendung der Getriebeübersetzung. Diese ist in Fig. 5 oben rechts als $N_{vorh,rechts}$ beispielhaft für die Drehrichtung rechts gezeigt.

In einem nachfolgenden Schritt 45 wird aus dem äquivalenten Drehmoment in Abhängigkeit des aktuellen Schädigungsmechanismus eine äquivalente Zahnfußspannung oder eine äquivalente Zahnflankenpressung berechnet. In Fig. 5 ist hierzu beispielhaft die Zahnfußspannung dargestellt. Das äquivalente Drehmoment wird in Fig. 5 oben rechts als vertikale Linie in das Diagramm übertragen. Der Schnittpunkt mit der Zahnfußspannungskurve 53 ergibt die zum äquivalenten Drehmoment $M_{eq}$ gehörende äquivalente Zahnfußspannung $\sigma_F$.

In einem nachfolgenden Schritt 46 wird aus der äquivalenten Zahnfußspannung $\sigma_F$ oder der äquivalenten Zahnflankenpressung eine ertragbare Anzahl an Lastwechseln $N_F$ berechnet. Dies erfolgt anhand des zugehörigen Wöhlerdiagramms 51 aus der Parameterdatenbank. In Fig. 5 ist zur Veranschaulichung ein horizontaler Pfeil aus dem Diagramm oben links ausgehend von dem Schnittpunkt $\sigma_F$ auf das Wöhlerdiagramm 51 oben rechts gezeigt. Der Schnittpunkt F mit der Wöhlerkurve entspricht dieser äquivalenten Anzahl an Lastwechseln $N_F$. Da die äquivalente Zahnfußspannung $\sigma_F$ größer als die dauerhaft ertragbare Zahnfußspannung ist, ist die äquivalente Anzahl an Lastwechseln $N_F$ kleiner als die dauerhaft ertragbare Anzahl an Lastwechseln $N_{FD}$.

Schließlich wird in einem Schritt 47 aus dem Verhältnis der berechneten Lastwechsel $N_{vorh,rechts}$ im Lastkollektiv und der berechneten äquivalenten Anzahl an Lastwechseln $N_F$ eine Teilschädigung $dS_{F,rechts}$ berechnet zu:

$$dS_{F,rechts} = N_{vorh,rechts} \, / \, N_F$$

Wie bereits oben erwähnt, besitzt eine Verzahnung zwei Schädigungsmechanismen, Zahnfußspannung und Flankenpressung. Das oben genannte Verfahren muss also pro Komponente für jeden dieser Schädigungsmechanismen für jede Drehrichtung, also viermal, ausgeführt werden, um eine Schädigung einer Verzahnung zu bestimmen.

Bezugszeichenliste

| | |
|---|---|
| 1 | Vorrichtung zur Berechnung einer Restlebensdauer |
| 2 | Getriebe |
| 3 | Messvorrichtung |
| 4 | Messwertdatenbank |
| 5 | Parameterdatenbank |
| 6 | Berechnungseinheit |
| 7 | Darstellungseinheit |
| 21 - 27 | Verfahrensschritte zur Berechnung einer Restlebensdauer einer Komponente |
| 31 - 35 | Verfahrensschritte zur Berechnung einer Teilschädigung eines Wälzlagers |
| 41 - 47 | Verfahrensschritte zur Berechnung einer Teilschädigung einer Verzahnung |
| 51 | Wöhlerdiagramm |
| 52 | Zahnflankenpressung |
| 53 | Zahnfußspannung |
| 54 | Lastkollektiv |
| 61 | Schädigungsverlauf |
| $M_{eq}$ | äquivalentes Drehmoment |
| $N_F$ | äquivalente Anzahl an Lastwechseln |
| $N_{FD}$ | dauerhaft ertragbare Anzahl an Lastwechseln |
| $N_{vorh,rechts}$ | vorhandene Anzahl an Lastwechseln im aktuellen Lastkollektiv |
| $\sigma_F$ | äquivalente Zahnfußspannung |
| $\sigma_{FD}$ | dauerhaft ertragbare Zahnfußspannung |

**Patentansprüche**

1. Computerimplementiertes Verfahren zur Bestimmung der Restlebensdauer einer Komponente eines Getriebes (2), **dadurch gekennzeichnet, dass** einmalig:

   - Parameter des Getriebes und der Komponente bestimmt werden (21), wobei die Parameter des Getriebes und der Komponenten beispielsweise umfassen: Art und Typ der Wälzlager, Anzahl der Zähne der Zahnräder, Gesamtübersetzung des Getriebes und
   - aus den Parametern eine Nennlebensdauer der Komponente ermittelt wird (21), wobei die Nennlebensdauer auf Grundlage einer Nenndrehzahl und eines Nenndrehmoments angegeben ist,
   dass während dem Betrieb wiederholt:

      - ein aktueller Lastzustand des Getriebes erfasst wird, wobei der Lastzustand auch die Drehrichtung beinhaltet,
      - für jede Drehrichtung und/oder jeden Schädigungsmechanismus aus dem Lastzustand eine Teilschädigung der Komponente berechnet wird (22), wobei berechnete Teilschädigungen zu einer Schädigung summiert (24) und zur vorherigen Schädigung addiert (25) werden, so dass ein zeitlicher Schädigungsverlauf bildbar ist.

und dass nach einer vorbestimmten Anzahl an Teilschädigungsberechnungen:

- durch lineare Regression des Schädigungsverlaufs und Extrapolation der Regressionsgeraden auf die Nennlebensdauer eine Restlebensdauer der Komponente bestimmt wird (27).

2. Verfahren nach Anspruch 1, **dadurch gekennzeichnet, dass** eine Komponente des Getriebes eine Verzahnung oder ein Lager, insbesondere Wälzlager, ist.

3. Verfahren nach einem der vorangehenden Ansprüche, **dadurch gekennzeichnet, dass** die Nennlebensdauer einer Komponente in Abhängigkeit zu einer Nenndrehzahl und einem Nenndrehmoment unter Dauerlast berechnet wird, und/oder dass zur Ermittlung der Nennlebensdauer die Eckpunkte zur Dauerfestigkeit und Kurzzeitfestigkeit in einem Wöhlerdiagramm der Komponente zu einem Schädigungsmechanismus, insbesondere Zahnfußschaden und Zahnflankenschaden, bestimmt werden.

4. Verfahren nach einem der vorangehenden Ansprüche, **dadurch gekennzeichnet, dass** der aktuelle Lastzustand eine aktuelle Drehzahl und ein aktuelles Drehmoment am Getriebe, eine vorgegebene Solldrehzahl und ein vorgegebenes Solldrehmoment oder ein Lastkollektiv umfasst.

5. Verfahren nach einem der vorangehenden Ansprüche, **dadurch gekennzeichnet, dass** der aktuelle Lastzustand durch Messen der Drehzahl und des Drehmoments, insbesondere an der Abtriebswelle oder der Antriebswelle des Getriebes, ermittelt wird, insbesondere wobei der aktuelle Lastzustand der Komponente durch Umrechnung der Messwerte anhand der Parameter erfolgt.

6. Verfahren nach einem der vorangehenden Ansprüche, **dadurch gekennzeichnet, dass** die Berechnung der Restlebensdauer in einer, insbesondere zentralen, Berechnungseinheit durchgeführt wird, sobald neue Messwerte übermittelt wurden.

7. Verfahren nach einem der vorangehenden Ansprüche, **dadurch gekennzeichnet, dass** die einmalig bestimmten Parameter und Nennlebensdauern in einer, insbesondere zentralen, Parameter-Datenbank gespeichert sind und die Berechnungseinheit auf die Parameter-Datenbank Zugriff besitzt.

8. Verfahren nach einem der vorangehenden Ansprüche, **dadurch gekennzeichnet, dass** die erfassten Lastzustände an eine, insbesondere zentrale, Messwerte-Datenbank übertragen werden, insbesondere wobei die Lastzustände vor der Übertragung verschlüsselt und/oder komprimiert werden, und die Berechnungseinheit auf die Messwerte-Datenbank Zugriff besitzt, insbesondere wobei vor der Übertragung an die Messwerte-Datenbank aus mehreren Messwerten ein Lastäquivalent und ein Drehzahläquivalent berechnet wird und das Lastäquivalent und Drehzahläquivalent als aktueller Lastzustand zur Berechnung an die Messwerte-Datenbank übertragen werden.

9. Verfahren nach einem der vorangehenden Ansprüche, **dadurch gekennzeichnet, dass** die Komponente ein Wälzlager ist, wobei die Nennlebensdauer eine Nenndrehzahl und ein Nenndrehmoment umfasst, und wobei der aktuelle Lastzustand eine aktuelle Drehzahl und ein aktuelles Drehmoment umfasst, **dadurch gekennzeichnet, dass** zur Berechnung der Teilschädigung:

- ein Drehzahlfaktor berechnet wird (32), der die aktuelle Drehzahl in ein Verhältnis zur Nenndrehzahl setzt und ein Drehmomentfaktor berechnet wird (32), der das aktuelle Drehmoment in ein Verhältnis zum Nenndrehmoment setzt, und
- aus den Faktoren und der Nennlebensdauer eine Bezugslebensdauer berechnet wird (33) und aus dieser Bezugslebensdauer die Teilschädigung berechnet wird (34).

10. Verfahren nach einem der vorangehenden Ansprüche, **dadurch gekennzeichnet, dass** die Komponente eine Verzahnung ist, wobei die Nennlebensdauer eine Nenndrehzahl und ein Nenndrehmoment umfasst, wobei die Parameter wenigstens ein Wöhlerdiagramm für jeden Schädigungsmechanismus in beide Drehrichtungen umfassen, und wobei der aktuelle Lastzustand als Lastkollektiv vorliegt, **dadurch gekennzeichnet, dass** zur Berechnung der Teilschädigung die folgenden Schritte ausgeführt werden:

- für jeden Schädigungsmechanismus und jede Drehrichtung ein dauerhaft ertragbares Drehmoment berechnet wird (41), bei dem kein Schaden gemäß dem Schädigungsmechanismus auftritt,
- alle Messwerte mit einem Betrag kleiner als das dauerhaft ertragbare Drehmoment aus dem Lastkollektiv entfernt werden (42),
- aus dem verbleibenden Lastkollektiv eine äquivalente Drehzahl und ein äquivalentes Drehmoment bestimmt wird (43),
- aus der äquivalenten Drehzahl eine Anzahl an Lastwechseln berechnet wird (44), insbesondere unter Verwendung der Getriebeübersetzung,
- aus dem äquivalenten Drehmoment in Abhängigkeit des aktuellen Schädigungsmechanismus eine äquivalente Zahnfußspannung oder eine äquivalente Zahnflankenpressung berechnet wird (45),
- aus der Zahnfußspannung oder der Zahnflankenpressung eine ertragbare Anzahl an Lastwechseln berechnet wird (46) und
- aus dem Verhältnis der berechneten Lastwechsel im Lastkollektiv und der berechneten ertragbaren Anzahl an Lastwechseln eine Teilschädigung berechnet wird (47).

11. Verfahren zur Bestimmung der Restlebensdauer eines Getriebes wobei für wenigstens eine Komponente, insbesondere aller Komponenten, des Getriebes eine Restlebensdauer gemäß dem Verfahren eines der vorangehenden Ansprüche bestimmt wird und aus den Restlebensdauern der einzelnen Komponenten eine Gesamt-Restlebensdauer des Getriebes ermittelt wird.

12. Verfahren nach Anspruch 11, **dadurch gekennzeichnet, dass** die Gesamt-Restlebensdauer der kürzesten, ermittelten Restlebensdauer der einzelnen Komponenten entspricht.

13. Vorrichtung zur Ermittlung einer Restlebensdauer eines Getriebes (2), mit einer Messvorrichtung (3) zur Erfassung einer Drehzahl und eines Drehmoments des Getriebes (2), und mit einer Berechnungseinheit (6) zur Durchführung des Verfahrens nach einem der vorangehenden Ansprüche.

14. Vorrichtung nach Anspruch 13, **dadurch gekennzeichnet, dass** die Vorrichtung eine Parameterdatenbank (5) zum Speichern der Parameter des Getriebes (2) aufweist, insbesondere wobei die Parameterdatenbank (5) eine über das Internet zugängliche zentrale Datenbank ist, und die Berechnungseinheit (6) zum Abrufen von Parametern mit der Parameterdatenbank (5) verbunden ist.

15. Vorrichtung nach Anspruch 13 oder 14, **dadurch gekennzeichnet, dass** die Vorrichtung eine Messwertedatenbank (4) aufweist, in der die von der Messvorrichtung (3) erfassten Messwerte gespeichert werden, insbesondere wobei die Messwertedatenbank (4) eine über das Internet zugängliche zentrale Datenbank ist, und die Berechnungseinheit (6) zum Abrufen von Messwerten mit der Messwertedatenbank (4) verbunden ist.

## Claims

1. Computer-implemented method for determining the remaining service life of a component of a gear mechanism (2), **characterized**

   **in that** the following are performed only once:

   - parameters of the gear mechanism and of the component are determined (21), wherein the parameters of the gear mechanism and of the component comprise, for example: the nature and type of the rolling bearings, the number of teeth of the gear wheels, the overall gear ratio of the gear mechanism, and
   - a nominal service life of the component is determined (21) from the parameters, wherein the nominal service life is specified on the basis of a nominal rotational speed and a nominal torque,

   **in that** the following are performed repeatedly during operation:

   - a current load state of the gear mechanism is detected, wherein the load state also includes the direction of rotation,
   - for each direction of rotation and/or each damage mechanism, a partial damage on the component is calculated (22) from the load state, wherein calculated partial damages are summed (24) to form a damage, which is added (25) to the previous damage such that a damage curve over time can be formed,

and **in that** the following is performed after a predetermined number of partial damage calculations:

- a remaining service life of the component is determined (27) by linear regression of the damage curve and extrapolation of the regression line to the nominal service life.

2. Method according to claim 1, **characterized in that** a component of the gear mechanism is a toothing or a bearing, in particular a rolling bearing.

3. Method according to any of the preceding claims, **characterized in that** the nominal service life of a component is calculated as a function of a nominal rotational speed and a nominal torque under continuous load, and/or **in that**, in order to determine the nominal service life, the turning points for high cycle fatigue and low cycle fatigue in an S-N diagram of the component are determined for a damage mechanism, in particular tooth root damage and tooth flank damage.

4. Method according to any of the preceding claims, **characterized in that** the current load state comprises a current rotational speed and a current torque on the gear mechanism, a predefined target rotational speed and a predefined target torque, or a load spectrum.

5. Method according to any of the preceding claims, **characterized in that** the current load state is determined by measuring the rotational speed and the torque, in particular on the output shaft or the input shaft of the gear mechanism, in particular wherein the current load state of the component takes place by recalculating the measured values on the basis of the parameters.

6. Method according to any of the preceding claims, **characterized in that** the calculation of the remaining service life is performed in a calculation unit, in particular a central calculation unit, as soon as new measured values have been transmitted.

7. Method according to any of the preceding claims, **characterized in that** the parameters and nominal service lives, which are determined once only, are stored in a parameter database, in particular a central parameter database, and the calculation unit has access to the parameter database.

8. Method according to any of the preceding claims, **characterized in that** the detected load states are transferred to a measured value database, in particular a central measured value database, in particular wherein the load states are encrypted and/or compressed prior to being transferred, and the calculation unit has access to the measured value database, in particular wherein a load equivalent and a rotational speed equivalent are calculated from a plurality of measured values prior to being transferred to the measured value database, and the load equivalent and the rotational speed equivalent are transferred to the measured value database as the current load state for the calculation.

9. Method according to any of the preceding claims, **characterized in that** the component is a rolling bearing, wherein the nominal service life comprises a nominal rotational speed and a nominal torque, and wherein the current load state comprises a current rotational speed and a current torque, **characterized in that**, in order to calculate the partial damage:

- a rotational speed factor is calculated (32), which relates the current rotational speed to the nominal rotational speed, and a torque factor is calculated (32), which relates the current torque to the nominal torque, and
- a reference service life is calculated (33) from the factors and the nominal service life, and the partial damage is calculated (34) from this reference service life.

10. Method according to any of the preceding claims, **characterized in that** the component is a toothing, wherein the nominal service life comprises a nominal rotational speed and a nominal torque, wherein the parameters comprise at least one S-N diagram for each damage mechanism in both directions of rotation, and wherein the current load state is in the form of a load spectrum, **characterized in that**, in order to calculate the partial damage, the following steps are carried out:

- for each damage mechanism and each direction of rotation, a continuously tolerable torque is calculated (41), at which no damage occurs according to the damage mechanism,
- all measured values having an absolute value lower than the continuously tolerable torque are removed (42) from the load spectrum,

- an equivalent rotational speed and an equivalent torque are determined (43) from the remaining load spectrum,
- a number of load changes is calculated (44) from the equivalent rotational speed, in particular using the gear ratio,
- an equivalent tooth root stress or an equivalent tooth flank pressure is calculated (45) from the equivalent torque as a function of the current damage mechanism,
- a tolerable number of load changes is calculated (46) from the tooth root stress or the tooth flank pressure, and
- a partial damage is calculated (47) from the ratio of the calculated load changes in the load spectrum and the calculated tolerable number of load changes.

11. Method for determining the remaining service life of a gear mechanism, wherein, for at least one component, in particular all components, of the gear mechanism, a remaining service life is determined by the method according to any of the preceding claims, and, from the remaining service lives of the individual components, an overall remaining service life of the gear mechanism is determined.

12. Method according to claim 11, **characterized in that** the overall remaining service life corresponds to the shortest determined remaining service life of the individual components.

13. Device for determining a remaining service life of a gear mechanism (2), comprising a measuring device (3) for detecting a rotational speed and a torque of the gear mechanism (2), and a calculation unit (6) for carrying out the method according to any of the preceding claims.

14. Device according to claim 13, **characterized in that** the device comprises a parameter database (5) for storing the parameters of the gear mechanism (2), in particular wherein the parameter database (5) is a central database accessible via the Internet, and the calculation unit (6) is connected to the parameter database (5) in order to retrieve parameters.

15. Device according to claim 13 or 14, **characterized in that** the device comprises a measured value database (4), in which the measured values detected by the measuring device (3) are stored, in particular wherein the measured value database (4) is a central database accessible via the Internet, and the calculation unit (6) is connected to the measured value database (4) in order to retrieve measured values.

**Revendications**

1. Procédé mis en oeuvre par ordinateur pour la détermination de la durée de vie résiduelle d'un composant d'une transmission (2), **caractérisé en ce que**, une seule fois :

   - des paramètres de la transmission et du composant sont déterminés (21), les paramètres de la transmission et des composants comprenant par exemple : le type et la catégorie des roulements, le nombre de dents des engrenages, le rapport de transmission total de la transmission, et
   - à partir des paramètres, une durée de vie nominale du composant est déterminée (21), la durée de vie nominale étant indiquée sur la base d'une vitesse nominale et d'un couple nominal, **en ce que**, pendant le fonctionnement, de manière répétée :

      - un état de charge actuel de la transmission est acquis, l'état de charge comprenant également le sens de rotation,
      - pour chaque sens de rotation et/ou chaque mécanisme d'endommagement, un endommagement partiel du composant est calculé à partir de l'état de charge (22), les endommagements partiels calculés étant additionnés pour former un endommagement (24) et ajoutés à l'endommagement précédent (25), de sorte qu'une évolution temporelle de l'endommagement puisse être formée, et **en ce qu'**après un nombre prédéterminé de calculs d'endommagement partiel:

         - par régression linéaire de l'évolution temporelle de l'endommagement et extrapolation de la droite de régression à la durée de vie nominale, une durée de vie résiduelle du composant est déterminée (27).

2. Procédé selon la revendication 1, **caractérisé en ce qu'**un composant de la transmission est une denture ou un palier, en particulier un roulement.

3. Procédé selon l'une quelconque des revendications précédentes, **caractérisé en ce que** la durée de vie nominale d'un composant est calculée en fonction d'une vitesse nominale et d'un couple nominal sous charge permanente, et/ou **en ce que**, pour la détermination de la durée de vie nominale, les points caractéristiques de la résistance à la fatigue et de la résistance à la fatigue à court terme dans un diagramme de Wöhler du composant pour un mécanisme d'endommagement, en particulier endommagement du pied de dent et endommagement du flanc de dent, sont déterminés.

4. Procédé selon l'une quelconque des revendications précédentes, **caractérisé en ce que** l'état de charge actuel comprend une vitesse de rotation actuelle et un couple actuel au niveau de la transmission, une vitesse de rotation prescrite et un couple prescrit ou un collectif de charge.

5. Procédé selon l'une quelconque des revendications précédentes, **caractérisé en ce que** l'état de charge actuel est déterminé par la mesure de la vitesse de rotation et du couple, en particulier sur l'arbre de sortie ou l'arbre d'entraînement de la transmission, en particulier l'état de charge actuel du composant étant obtenu par conversion des valeurs mesurées sur la base des paramètres.

6. Procédé selon l'une quelconque des revendications précédentes, **caractérisé en ce que** le calcul de la durée de vie résiduelle est effectué dans une unité de calcul, en particulier centrale, dès que de nouvelles valeurs mesurées ont été transmises.

7. Procédé selon l'une quelconque des revendications précédentes, **caractérisé en ce que** les paramètres et durées de vie nominales déterminés une seule fois sont stockés dans une base de données des paramètres, en particulier centrale, et **en ce que** l'unité de calcul a accès à la base de données des paramètres.

8. Procédé selon l'une quelconque des revendications précédentes, **caractérisé en ce que** les états de charge acquis sont transmis à une base de données des valeurs mesurées, en particulier centrale, **en ce que**, notamment, les états de charge sont chiffrés et/ou compressés avant la transmission, et **en ce que** l'unité de calcul a accès à la base de données des valeurs mesurées, **en ce que**, notamment, avant la transmission à la base de données des valeurs mesurées, un équivalent de charge et un équivalent de vitesse de rotation sont calculés à partir de plusieurs valeurs mesurées, et l'équivalent de charge et l'équivalent de vitesse de rotation sont transmis à la base de données des valeurs mesurées comme état de charge actuel pour le calcul.

9. Procédé selon l'une quelconque des revendications précédentes, **caractérisé en ce que** le composant est un roulement, la durée de vie nominale comprenant une vitesse nominale et un couple nominal, et **en ce que** l'état de charge actuel comprend une vitesse de rotation actuelle et un couple actuel, **caractérisé en ce que**, pour le calcul de l'endommagement partiel :

- un facteur de vitesse de rotation est calculé (32), qui met la vitesse de rotation actuelle en rapport avec la vitesse nominale, et un facteur de couple est calculé (32), qui met le couple actuel en rapport avec le couple nominal, et
- à partir des facteurs et de la durée de vie nominale, une durée de vie de référence est calculée (33) et, à partir de cette durée de vie de référence, l'endommagement partiel est calculé (34).

10. Procédé selon l'une quelconque des revendications précédentes, **caractérisé en ce que** le composant est une denture, la durée de vie nominale comprenant une vitesse nominale et un couple nominal, les paramètres comprenant au moins un diagramme de Wöhler pour chaque mécanisme d'endommagement dans les deux sens de rotation, et **en ce que** l'état de charge actuel est présent sous forme de collectif de charge, **caractérisé en ce que**, pour le calcul de l'endommagement partiel, les étapes suivantes sont exécutées :

- pour chaque mécanisme d'endommagement et chaque sens de rotation, un couple durablement supportable est calculé (41), pour lequel aucun dommage selon le mécanisme d'endommagement n'apparaît,
- toutes les valeurs mesurées dont la valeur absolue est inférieure au couple durablement supportable sont supprimées du collectif de charge (42),
- à partir du collectif de charge restant, une vitesse de rotation équivalente et un couple équivalent sont déterminés (43),
- à partir de la vitesse de rotation équivalente, un nombre de cycles de charge est calculé (44),

en particulier en utilisant le rapport de transmission,

- à partir du couple équivalent, en fonction du mécanisme d'endommagement actuel, une contrainte équivalente au pied de dent ou une pression équivalente sur le flanc de dent est calculée (45),

- à partir de la contrainte au pied de dent ou de la pression sur le flanc de dent, un nombre supportable de cycles de charge est calculé (46), et

- à partir du rapport entre les cycles de charge calculés dans le collectif de charge et le nombre supportable de cycles de charge calculé, un endommagement partiel est calculé (47).

11. Procédé pour la détermination de la durée de vie résiduelle d'une transmission, dans lequel, pour au moins un composant, en particulier pour tous les composants, de la transmission, une durée de vie résiduelle est déterminée selon le procédé selon l'une quelconque des revendications précédentes, et à partir des durées de vie résiduelles des différents composants, une durée de vie résiduelle totale de la transmission est déterminée.

12. Procédé selon la revendication 11, **caractérisé en ce que** la durée de vie résiduelle totale correspond à la plus courte des durées de vie résiduelles déterminées des différents composants.

13. Dispositif pour la détermination d'une durée de vie résiduelle d'une transmission (2), comprenant un dispositif de mesure (3) pour l'acquisition d'une vitesse de rotation et d'un couple de la transmission (2), et une unité de calcul (6) pour l'exécution du procédé selon l'une quelconque des revendications précédentes.

14. Dispositif selon la revendication 13, **caractérisé en ce que** le dispositif comprend une base de données des paramètres (5) pour le stockage des paramètres de la transmission (2), en particulier la base de données des paramètres (5) étant une base de données centrale accessible via Internet, et l'unité de calcul (6) étant connectée à la base de données des paramètres (5) pour récupérer des paramètres.

15. Dispositif selon la revendication 13 ou 14, **caractérisé en ce que** le dispositif comprend une base de données des valeurs mesurées (4), dans laquelle les valeurs mesurées acquises par le dispositif de mesure (3) sont stockées, en particulier la base de données des valeurs mesurées (4) étant une base de données centrale accessible via Internet, et l'unité de calcul (6) étant connectée à la base de données des valeurs mesurées (4) pour récupérer des valeurs mesurées.

Fig. 1

Fig. 2

Fig. 3

Fig. 4

Fig. 5

EP 4 381 266 B1

Fig. 6

EP 4 381 266 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018214099 A1
- US 20170082188 A1
- DE 1052200 A
- US 20040122618 A1
- EP 1744934 B1
- DE 10222187 A1
- US 20110106510 A1
- US 2014379199 A1